# EUROPEAN PATENT APPLICATION

(11) **EP 4 588 989 A1**
(43) Date of publication of application: **23.07.2025**
(21) Application number: 23865276.2
(22) Date of filing: 29.08.2023
(51) Int. Cl.: C09K 3/10, C08L 63/00, C08L 101/10, C08G 59/18

(54) **TWO COMPONENT CURABLE RESIN COMPOSITION FOR HYDROGEN GAS SEALING, AND CURED PRODUCT OF SAME**

(30) Priority: 16.09.2022 JP 2022148374
(71) Applicant: ThreeBond Co., Ltd., Tokyo 192-0398 (JP)
(72) Inventor: SOGA, Tetsunori, Hachioji-shi, Tokyo 192-0398 (JP); NAGAHORI, Tomomi, Hachioji-shi, Tokyo 192-0398 (JP); KASAMA, Yuma, Hachioji-shi, Tokyo 192-0398 (JP)
(74) Representative: Crow, Martin
(86) International application number: PCT/JP2023/031283
(87) International publication number: WO 2024/057920

(57) **Abstract**

An object of the present invention is to provide a two-component curable resin composition that can provide a cured material having excellent hydrogen gas barrier properties, high extensibility, and high strength.

The present invention provides a two-component curable resin composition for hydrogen gas sealing comprising the following agent A and agent B: agent A: a composition containing an epoxy resin as a component (a) and a catalyst as a component (b); and agent B: a composition containing an organic polymer having two or more hydrolyzable silyl groups in one molecule as a component (c) and a curing agent for an epoxy resin as a component (d), wherein a cured material of the two-component curable resin composition for hydrogen gas sealing has a sea-island structure.

## Description

### TECHNICAL FIELD

The present invention relates to a two-component curable resin composition for hydrogen gas sealing and a cured material thereof.

### BACKGROUND ART

Conventionally, epoxy resins have been used in various applications such as adhesives, sealing agents, sealants, potting agents, coating agents, and conductive pastes, because of their excellent adhesive strength, sealing properties, high strength, heat resistance, electrical properties, and chemical resistance. However, the cured materials of such epoxy resins exhibit high mechanical strength, but have problems such as poor extensibility.

Therefore, in order to impart extensibility to epoxy resins, modified silicone resins have been added. As such a technique, Japanese Patent Laid-Open No. 2007-099806 discloses a two-component curable resin composition containing a liquid A and a liquid B, where the liquid A contains an epoxy resin and a curing catalyst of a modified silicone-based polymer, and the liquid B contains a modified silicone-based polymer having an alkoxysilyl group at a terminal and a curing agent of the epoxy resin.

### SUMMARY OF INVENTION

However, there is a problem that the cured material of the two-component curable resin composition disclosed in Japanese Patent Laid-Open No. 2007-099806 has poor hydrogen gas barrier properties.

Therefore, an object of the present invention is to provide a two-component curable resin composition for hydrogen gas sealing that can provide a cured material having excellent hydrogen gas barrier properties, high extensibility, and high strength.

The outline of the present invention will be described below. The embodiments of the present invention overcome the above-mentioned problems of the conventional art.
**[1]** A two-component curable resin composition for hydrogen gas sealing, comprising the following agent A and agent **B:**
   agent A: a composition containing an epoxy resin as a component (a) and a catalyst as a component (b); and
   agent **B:** a composition containing an organic polymer having two or more hydrolyzable silyl groups in one molecule as a component (c) and a curing agent for an epoxy resin as a component (d),
   wherein a cured material of the two-component curable resin composition for hydrogen gas sealing has a sea-island structure.
**[2]** The two-component curable resin composition for hydrogen gas sealing according to [1]**,**
   wherein the component (a) contains a hydrogenated epoxy resin as a component (a-1).
[3] The two-component curable resin composition for hydrogen gas sealing according to [1] or [2],
   wherein the two-component curable resin composition for hydrogen gas sealing contains 0.1 to 20 parts by mass of the component (b) relative to 100 parts by mass of the component (c).
[4] The two-component curable resin composition for hydrogen gas sealing according to any one of [1] to [3],
   wherein the hydrolyzable silyl group includes a trimethoxysilyl group.
[5] The two-component curable resin composition for hydrogen gas sealing according to any one of [1] to [4],
   wherein the component (d) is an amine compound that is liquid at 25°C.
[6] The two-component curable resin composition for hydrogen gas sealing according to any one of [1] to [5],
   wherein the agent A and/or the agent B further contain(s) a silane coupling agent as a component (e).
[7] The two-component curable resin composition for hydrogen gas sealing according to any one of [1] to [6],
   wherein the component (a) contains a hydrogenated epoxy resin as a component (a-1) and an aromatic epoxy resin as a component (a-2).
[8] The two-component curable resin composition for hydrogen gas sealing according to any one of [1] to [7],
   wherein the cured material is obtained by mixing the agent A and the agent B, followed by aging a mixture for 12 hours or more under an environment of 20 to 30°C and 40 to 60% RH.
[9] A two-component curable resin composition for hydrogen gas sealing comprising the following agent A and agent B:
   agent A: a composition containing an epoxy resin as a component (a) and a catalyst as a component (b),
   where the component (a) contains a hydrogenated epoxy resin as a component (a-1); and
   agent B: a composition containing an organic polymer having two or more hydrolyzable silyl groups in one molecule as a component (c) and a curing agent for an epoxy resin as a component (d).
[10] A cured material obtained by curing the two-component curable resin composition for hydrogen gas sealing according to any one of [1] to [9].
[11] A method for producing a cured material having a sea-island structure, comprising:
   mixing the following agent A and agent B, followed by aging a mixture under an environment of 20 to 30°C and 40 to 60% RH:
   agent A: a composition containing an epoxy resin as a component (a) and a catalyst as a component (b),
   where the component (a) contains a hydrogenated epoxy resin as a component (a-1); and
   agent B: a composition containing an organic polymer having two or more hydrolyzable silyl groups in one molecule as a component (c) and a curing agent for an epoxy resin as a component (d).

The two-component curable resin composition for hydrogen gas sealing of the present invention can provide a cured material having excellent hydrogen gas barrier properties, high extensibility, and high strength.

### DESCRIPTION OF EMBODIMENTS

Hereinafter, the embodiments of the present invention will be described. Note that, the present disclosure is not limited only to the following embodiments. Throughout this specification, the expression of a singular form should be understood to include the concept of its plural form, unless otherwise specified. Therefore, articles of singular forms (for example, in the case of English, "a", "an", "the", etc.) should be understood to include the concept of their plural forms, unless otherwise specified. In addition, it should be understood that the terms used in this specification are used in the sense commonly used in the relevant art, unless otherwise specified. Therefore, unless otherwise defined, all technical terms and scientific and technical terms used in this specification have the same meanings as commonly understood by those skilled in the art to which this invention belongs. In the case of a conflict, this specification (including definitions) should be prioritized. The present invention is not limited to the following embodiments, and can be modified in various ways within the scope of the claims. In addition, in this specification, "X to Y" is used to mean that the numerical values (X and Y) described before and after it are included as a lower limit value and an upper limit value, and means "X or more and Y or less". In addition, unless otherwise specified, a concentration "%" represents a mass concentration "% by mass", and a ratio represents a mass ratio unless otherwise specified. Furthermore, unless otherwise specified, operations and measurements of physical properties and the like are performed under the conditions of room temperature (20 to 25°C) and relative humidity of 40 to 50% RH.

The two-component curable resin composition for hydrogen gas sealing according to one embodiment of the present invention is a two-component curable resin composition for hydrogen gas sealing, which contains: agent A that is a composition containing a component (a) and a component (b) that will be described later; and agent B that is a composition containing a component (c) and a component (d) that will be described later. Moreover, the agent A and/or the agent B of the two-component curable resin composition for hydrogen gas sealing according to one embodiment of the present invention can further contain a component (e) that will be described later, and the agent A and/or the agent B can further contain an optional component.

### <Two-component curable resin composition for hydrogen gas sealing>

One embodiment of the present invention is a two-component curable resin composition for hydrogen gas sealing, comprising the following agent A and agent B:
agent A: a composition containing an epoxy resin as a component (a) and a catalyst as a component (b); and
agent B: a composition containing an organic polymer having two or more hydrolyzable silyl groups in one molecule as a component (c) and a curing agent for an epoxy resin as a component (d),
wherein a cured material of the two-component curable resin composition for hydrogen gas sealing has a sea-island structure.

According to one embodiment of the present invention, it is possible to provide a two-component curable resin composition for hydrogen gas sealing that can provide a cured material having excellent hydrogen gas barrier properties, high extensibility, and high strength.

Another embodiment of the present invention is a two-component curable resin composition for hydrogen gas sealing, comprising the following agent A and agent B:
agent A: a composition containing an epoxy resin as a component (a) and a catalyst as a component (b),
where the component (a) contains a hydrogenated epoxy resin as a component (a-1); and
agent B: a composition containing an organic polymer having two or more hydrolyzable silyl groups in one molecule as a component (c) and a curing agent for an epoxy resin as a component (d).

### <Component (a)>

The component (a) contained in the agent A of the two-component curable resin composition for hydrogen gas sealing of the present embodiment contains an epoxy resin.

In a preferable embodiment, an epoxy resin as the component (a) contains a hydrogenated epoxy resin as a component (a-1) or an aromatic epoxy resin as a component (a-2). Among them, inclusion of the hydrogenated epoxy resin as the component (a-1) makes it further easier to form a sea-island structure in the cured material. In addition, inclusion of the hydrogenated epoxy resin as the component (a-1) makes it possible to obtain a cured material having much more excellent hydrogen gas barrier properties, high extensibility, and high strength, which is preferable.

As the hydrogenated epoxy resin of the component (a-1), for example, a compound, which is obtained by subjecting, to nucleus hydrogenation, an aromatic ring of an aromatic epoxy resin as a component (a-2) that will be described later, can be used. Examples of the hydrogenated epoxy resin of the component (a-1) include: a hydrogenated bisphenol type epoxy resin such as a hydrogenated bisphenol A type epoxy resin, a hydrogenated bisphenol F type epoxy resin, and a hydrogenated bisphenol E type epoxy resin; a hydrogenated cresol novolak type epoxy resin; and a hydrogenated phenol novolak type epoxy resin. Among them, the hydrogenated epoxy resin of the component (a-1) is preferably a hydrogenated bisphenol type epoxy resin, and particularly preferably a hydrogenated bisphenol A type epoxy resin because it is possible to obtain a cured material having excellent hydrogen gas barrier properties, high extensibility, and high strength. These components as the component (a-1) can be used alone or can be used by mixing two or more kinds thereof.

Examples of commercially available products of the component (a-1) include, but are not limited to, YX8000 and YX8034 (both are available from Mitsubishi Chemical Corporation), RIKARESIN (Registered Trademark) HBE-100 (available from New Japan Chemical Co., Ltd.), and ST-3000 (available from NIPPON STEEL Chemical & Material Co., Ltd.). These can be used alone respectively or can be used by mixing two or more kinds thereof.

Examples of the aromatic epoxy resin of the component (a-2) include, but are not limited to, a bisphenol type epoxy resin such as a bisphenol A type epoxy resin, a bisphenol F type epoxy resin, a bisphenol S type epoxy resin, and a bisphenol AD type epoxy resin; a novolak type epoxy resin such as a phenol novolak type epoxy resin and a cresol novolak type epoxy resin; a glycidylamine compound such as N,N-diglycidyl-4-glycidyloxyaniline, 4,4'-methylenebis(N,N-diglycidylaniline), tetraglycidyl diaminodiphenyl methane, and tetraglycidyl-m-xylylenediamine; a naphthalene type epoxy resin; and a biphenyl type epoxy resin. Among them, the aromatic epoxy resin of the component (a-2) is preferably a bisphenol type epoxy resin, and particularly preferably a bisphenol A type epoxy resin because a cured material that is excellent in high extensibility and high strength can be obtained. These compounds can be used alone respectively or can be used by mixing two or more kinds thereof.

Examples of commercially available products of the component (a-2) include, but are not limited to, jER (Registered Trademark) 825, 827, 828, 828US, 834, 1001, 806, and 807 (available from Mitsubishi Chemical Corporation); EPICLON (Registered Trademark) 840, 850, 830LVP, EXA850CRP, 835, and EXA835LV (available from DIC Corporation); and ADEKA RESIN (Registered Trademark) EP4100 and EP4400 (available from ADEKA CORPORATION). These can be used alone respectively or can be used by mixing two or more kinds thereof.

Note that, in the present specification, a glycidyl group-containing silane coupling agent shall not be included in the component (d), and shall be considered as a component (e) that will be described later.

When the two-component curable resin composition for hydrogen gas sealing of present embodiment contains both the component (a-1) and the component (a-2), a cured material that has much higher strength can be obtained. A mass ratio between the component (a-1) and the component (a-2) (parts by mass of the component (a-1) : parts by mass of the component (a-2)) is not particularly limited, but is in the range of, for example, 20:80 to 80:20, more preferably in the range of 25:75 to 75:25, still more preferably in the range of 30:70 to 70:30, and particularly preferably in the range of 35:65 to 65:35. Within the above range, it is possible to obtain a cured material having much more excellent hydrogen gas barrier properties, high extensibility, and high strength.

In one embodiment, the two-component curable resin composition for hydrogen gas sealing includes only the component (a-1) as the component (a). This makes it possible to obtain a cured material having much more excellent hydrogen gas barrier properties, high extensibility, and high strength. Particularly, compared to the case where the component (a-1) and the component (a-2) are used in combination, a cured material having a higher extensibility can be obtained.

A viscosity of the component (a) is not particularly limited, but is preferably 0.1 to 50 Pa·s, more preferably 0.3 to 30 Pa·s, and most preferably 0.5 to 10 Pa·s. When the component (a-1) and the component (a-2) are used in combination, the viscosity of the component (a-1) is preferably 0.1 to 50 Pa·s, more preferably 0.3 to 30 Pa·s, and most preferably 0.5 to 10 Pa·s. The viscosity of the component (a-2) is preferably 0.1 to 50 Pa·s, more preferably 0.3 to 30 Pa·s, still more preferably 1 to 15 Pa·s, and most preferably 5 to 15 Pa·s. When the viscosity of the component (a-1) is 0.1 to 50 Pa·s and the viscosity of the component (a-2) is 0.1 to 50 Pa·s, a cured material excellent in hydrogen gas barrier properties can be obtained. The viscosity of the component (a) of the present invention is a value measured at 25°C using a cone plate type viscometer.

A content of the component (a) in the two-component curable resin composition for hydrogen gas sealing of the present embodiment is preferably 1 to 500 parts by mass, more preferably 10 to 300 parts by mass, still more preferably 50 to 200 parts by mass, and particularly preferably 70 to 150 parts by mass, relative to 100 parts by mass of the component (c). Within the above range, the cured material of the two-component curable resin composition for hydrogen gas sealing according to the present embodiment has higher extensibility and higher strength. Preferably, when the agent A and the agent B are mixed, the content of the component (a) satisfies the above range.

### <Component (b)>

The component (b) contained in the agent A of the two-component curable resin composition for hydrogen gas sealing of this embodiment is a catalyst. Preferably, the component (b) is a curing catalyst of the component (c). The component (b) is not particularly limited, but is preferably a catalyst that crosslinks the component (c) that will be described later. Specific examples of the catalyst that crosslinks the component (c) include: a tin catalyst such as a dibutyltin compound such as dibutyltin dilaurate, dibutyltin oxide, dibutyltin diacetate, dibutyltin distearate, dibutyltin laurate oxide, dibutyltin diacetylacetonate, dibutyltin dioleyl malate, and dibutyltin octoate, a dioctyltin compound such as dioctyltin oxide and dioctyltin dilaurate, and a reaction product of a dioctyltin salt and a silicate; a titanium catalyst such as titanium tetraisopropoxide, titanium diisopropoxybis(acetylacetonate), tetraisopropyl titanate, tetraisopentyl titanate, tetra-n-butoxy titanate, and tetratertiary butyl titanate; an aluminum catalyst; a bismuth catalyst; a zirconium catalyst; a zinc catalyst; an amine salt; and an organic phosphoric acid compound. Among them, since the cured material is excellent in hydrogen gas barrier properties, a tin catalyst, a titanium catalyst, an aluminum catalyst, and a zinc catalyst are preferable, a titanium catalyst is more preferable, and titanium tetraisopropoxide, titanium diisopropoxybis(acetylacetonate), and tetratertiary butyl titanate are most preferable. These may be used alone or two or more kinds thereof may be used in combination. Moreover, since a cured material having a sea-island structure is more effectively formed, the component (b) preferably contains a titanium catalyst, and most preferably contains only a titanium catalyst.

Examples of commercially available products of the component (b) include, but are not limited to, NEOSTANN (Registered Trademark) U-100, U-130, U-200, and U-303 (available from Nitto Kasei Co., Ltd.) as the tin catalyst; ORGATIX (Registered Trademark) TA-8, TA-10, TA-21, TA-23, TA-30, TA-80, TC-100, TC-120, and TC-401 (available from Matsumoto Fine Chemical Co., Ltd.) as the titanium catalyst; K-KAT348 (available from King Industries, Inc.) as the bismuth catalyst; ORGATIX (Registered Trademark) ZA-45 (available from Matsumoto Fine Chemical Co., Ltd.) as the zirconium catalyst; DX-9740 (Shin-Etsu Chemical Co., Ltd.), AMD, ASBD, AIPD, ALCH, ALCH-TR, Aluminum Chelate M, Aluminum Chelate D, and Aluminum Chelate A (available from Kawaken Fine Chemicals Co., Ltd.), ORGATIX (Registered Trademark) AL-3001, AL-3100, AL-3200, and AL-3215 (available from Matsumoto Fine Chemical Co., Ltd.), and K-KAT5218 (available from King Industries, Inc.) as the aluminum catalyst; and K-KAT670 (available from King Industries, Inc.) as the zinc catalyst.

The content of the component (b) is preferably 0.1 to 20 parts by mass, more preferably 0.5 to 17 parts by mass, still more preferably the range of 1 to 13 parts by mass, and particularly preferably 2 to 5 parts by mass, relative to 100 parts by mass of the component (c) that will be described later. Within the above range, it is possible to obtain a cured material having much more excellent hydrogen gas barrier properties, high extensibility, and high strength. Preferably, when the agent A and the agent B are mixed, the content of the component (b) satisfies the above range.

The content of the component (b) relative to 100 parts by mass of the component (a) is preferably 0.1 to 20 parts by mass, more preferably 0.5 to 15 parts by mass, still more preferably 1 to 10 parts by mass, and particularly preferably 2 to 5 parts by mass. Within the above range, the two-component curable resin composition for hydrogen gas sealing according to the present embodiment makes it possible to obtain a cured material having much more excellent hydrogen gas barrier properties, high extensibility, and high strength. Preferably, when the agent A and the agent B are mixed, the content of the component (b) satisfies the above range.

### <Component (c)>

The component (c) contained in the agent B of the two-component curable resin composition for hydrogen gas sealing of the present embodiment is an organic polymer that includes two or more hydrolyzable silyl groups in one molecule. As the hydrolyzable silyl group, an alkoxysilyl group is preferable, and examples thereof include a methyldimethoxysilyl group, a trimethoxysilyl group, a methyldiethoxysilyl group, and a triethoxysilyl group. Among them, the hydrolyzable silyl group preferably includes a trimethoxysilyl group. Two or more hydrolyzable silyl groups contained in one molecule of the organic polymer may be identical to or different from each other. The number of hydrolyzable silyl groups contained in one molecule of the organic polymer is preferably 2 to 6, more preferably 2 to 3, and still more preferably 2.

Examples of the component (c) include an organic polymer having a methyldimethoxysilyl group, an organic polymer having a trimethoxysilyl group, an organic polymer having a methyldiethoxysilyl group, or an organic polymer having a triethoxysilyl group. These compounds may be used alone or two or more kinds thereof may be used in combination. Among them, it is preferable that the component (c) contains an organic polymer having a trimethoxysilyl group, and it is more preferable to use an organic polymer having a methyldimethoxysilyl group and an organic polymer having a trimethoxysilyl group in combination. When the organic polymer having a methyldimethoxysilyl group and the organic polymer having a trimethoxysilyl group are used in combination, the cured material of the two-component curable resin composition for hydrogen gas sealing is more excellent in hydrogen gas barrier properties.

A mass ratio in the case where the organic polymer having a methyldimethoxysilyl group and the organic polymer having a trimethoxysilyl group are used in combination is not particularly limited, but the organic polymer having a methyldimethoxysilyl group : the organic polymer having a trimethoxysilyl group is preferably 9:1 to 1:9, more preferably 8:2 to 2:8, still more preferably 7:3 to 3:7, even still more preferably 6:4 to 4:6, and particularly preferably 5.5:4.5 to 4.5:5.5. When the above mass ratio is 9:1 to 1:9, a cured material having more excellent hydrogen gas barrier properties can be obtained.

The hydrolyzable silyl group may be linked to a terminal or a side chain of an organic polymer. However, since a cured material having high extensibility and high strength can be obtained, a hydrolyzable silyl group is preferably linked to a terminal of an organic polymer, and hydrolyzable silyl groups are more preferably linked to both terminals of an organic polymer. In addition, the component (c) is preferably liquid at 25°C from the viewpoint of handling. The component (c) may be used alone or two or more kinds thereof may be mixed for use.

Examples of the organic polymer having a methyldimethoxysilyl group include a polyoxyalkylene having methyldimethoxysilyl groups at both terminals, a (meth)acrylic polymer having methyldimethoxysilyl groups at both terminals, a polyisobutylene having methyldimethoxysilyl groups at both terminals, and a polyurethane having methyldimethoxysilyl groups at both terminals. Examples of the organic polymer having a trimethoxysilyl group include a polyoxyalkylene having trimethoxysilyl groups at both terminals, a (meth)acrylic polymer having trimethoxysilyl groups at both terminals, a polyisobutylene having trimethoxysilyl groups at both terminals, and a polyurethane having trimethoxysilyl groups at both terminals. Examples of the organic polymer having a methyldiethoxysilyl group include a (meth)acrylic polymer having methyldiethoxysilyl groups at both terminals, a polyisobutylene having methyldiethoxysilyl groups at both terminals, and a polyurethane having methyldiethoxysilyl groups at both terminals. Examples of the organic polymer having a triethoxysilyl group include a (meth)acrylic polymer having triethoxysilyl groups at both terminals, a polyisobutylene having triethoxysilyl groups at both terminals, and a polyurethane having triethoxysilyl groups at both terminals.

The structure of the organic polymer is not particularly limited, but examples thereof include a structure of polyoxyalkylene, polyester, polycarbonate, polyurethane, polyamide, polyurea, polyimide, polyethylene, polypropylene, polyisobutylene, (meth)acrylic polymer, polystyrene, polyvinyl chloride, polybutadiene, polyisoprene, polyvinyl butyral, and polyvinyl ether. Among them, since a cured material having much more excellent hydrogen gas barrier properties, high extensibility, and high strength can be obtained, the structure of the organic polymer is preferably the structure of polyoxyalkylene, polyisobutylene, (meth)acrylic polymer, or the like, and is more preferably polyoxyalkylene. In addition, the structure of the organic polymer may be one kind alone, or may be a mixture of two or more kinds thereof.

Examples of commercially available products of the polyoxyalkylene having two or more hydrolyzable silyl groups in one molecule include SAT010, SAX115, SAT030, SAT200, SAT350, SAT400, SAX220, SAX510, SAX530, SAX575, SAX580, SAX710, SAX720, SAX720A, SAX725, SAX750, SAX770, S203, S303, S203H, S303H, S943S, S911S, MA440, MA440A, MA447, MA451, MA490, MA903, MA903M, MA904, S943, MAX923, MAX951, SAX510, SAX520, SAX530, and SAX580 (available from KANEKA CORPORATION), and ES-S2410, ES-S2420, ES-S3430, ES-S3610, and ES-S3630 (available from AGC Inc.). Examples of commercially available products of the (meth)acrylic polymer having two or more hydrolyzable silyl groups in one molecule of the component (c) include SA100S, SA310S, and OR100S (available from KANEKA CORPORATION). Examples of commercially available products of the polyisobutylene having two or more hydrolyzable silyl groups in one molecule of the component (c) include EP100S, EP103S, EP303S, and EP505S (available from KANEKA CORPORATION).

Note that, in the present specification, a silane coupling agent having two or more hydrolyzable silyl groups in one molecule shall not be included in the component (c), and shall be considered as a component (e) that will be described later.

A viscosity of the component (c) is not particularly limited, but is preferably 10 to 100 Pa·s at 23°C, more preferably 20 to 80 Pa·s at 23°C, still more preferably 30 to 70 Pa·s at 23°C, and even still more preferably 40 to 60 Pa·s at 23°C. The viscosity of the component (c) satisfying 10 to 100 Pa·s makes it possible to easily form a sea-island structure when the component (c) is mixed with the component (a), and thus a cured material having excellent hydrogen gas barrier properties, high extensibility, and high strength can be obtained. The viscosity of the component (c) in the present invention is a value measured at 23°C using a B type viscometer. Note that, when two or more kinds of compounds as the component (c) are used in combination, the viscosities of all the compounds more preferably fall within the above range.

The content of the component (c) in the two-component curable resin composition for hydrogen gas sealing of the present embodiment is preferably 30 to 250 parts by mass, more preferably 50 to 200 parts by mass, still more preferably 70 to 150 parts by mas, and even still more preferably 90 to 110 parts by mass, relative to 100 parts by mass of the component (a). Within the above range, it is possible to obtain a cured material having much more excellent hydrogen gas barrier properties, high extensibility, and high strength. Preferably, when the agent A and the agent B are mixed, the content of the component (c) satisfies the above range.

### <Component (d)>

The component (d) contained in the agent B of the two-component curable resin composition for hydrogen gas sealing of the present embodiment is a curing agent for an epoxy resin, and is a compound that can cure an epoxy resin that is the component (a) contained in the agent A. The component (d) is not particularly limited as long as the epoxy resin as the component (a) can be cured. Examples thereof include an amine compound, a polymercaptan compound, an acid anhydride compound, and an organic phosphorus-based compound. Examples of the amine compound include a primary amine, a secondary amine, a tertiary amine, a polyamide compound, an imidazole compound, and an epoxy adduct compound (a compound in which a tertiary amine is added to a compound having an imidazole skeleton or an epoxy resin to stop reaction in the middle of the reaction). Among them, since high extensibility, high strength, and hydrogen gas barrier properties are achieved, the component (d) preferably contains a tertiary amine, and most preferably contains only a tertiary amine. Moreover, since a cured material having a sea-island structure is more effectively formed, the component (d) preferably contains a tertiary amine, and most preferably contains only a tertiary amine. The component (d) may be used alone or two or more kinds thereof may be used in combination. The component (d) is preferably liquid at 25°C from the viewpoints of curing ability after mixing and workability.

The primary amine is not particularly limited. Examples thereof include an aliphatic primary amine, an alicyclic primary amine, and an aromatic group-containing primary amine. The aliphatic primary amine is not particularly limited, and examples thereof include ethylenediamine, diethylenetriamine, triethylenetetramine, hexamethylenediamine, and dimer diamine. The alicyclic primary amine is not particularly limited, and examples thereof include menthenediamine, isophoronediamine, N-aminoethylpiperazine, diaminodicyclohexylmethane, and norbornanediamine. The aromatic group-containing primary amine is not particularly limited, and examples thereof include dimethylaminomethylphenol, m-xylylenediamine, m-phenylenediamine, diaminodiphenyl methane, diaminodiphenyl sulfone, and diaminodiethyldiphenyl methane. In the present specification, an amino group-containing silane coupling agent shall not be included in the component (d) and shall be considered as the component (e) that will be described later.

The secondary amine or the tertiary amine is not particularly limited, and examples thereof include a secondary amine such as piperidine, and a tertiary amine such as pyridine, benzyldimethylamine, 2-(dimethylaminomethyl)phenol, triethylenediamine, dimethylcyclohexylamine, dimethylbenzylamine, dimethylhexylamine, dimethylaminophenol, dimethylamino p-cresol, 1,4-diazadicyclo[2.2.2]octane, 2,4,6-tris(dimethylaminomethyl)phenol, and 1,8-diazabicyclo[5.4.0]undecene-1. Examples of commercially available products thereof include K54 (available from Air Products Japan). As the secondary amine and the tertiary amine, a compound having an aromatic ring is preferable from the viewpoint of excellent curing ability.

Examples of the polyamide compound include polyamide amine.

The component (d) is preferably an amine compound that is liquid at 25°C from the viewpoints of curing ability after mixing the agent A and the agent B, and workability. Examples of the amine compound that is liquid at 25°C include 2,4,6-tris(dimethylaminomethyl)phenol, polyamide amine, and dimer diamine.

The imidazole compound is not particularly limited, and examples thereof include 2-methylimidazole, 1,2-dimethylimidazole, 2-phenylimidazole, 2-undecylimidazole, 2-heptadecylimidazole, 1-isobutyl-2-methylimidazole, 2-phenyl-4-methylimidazole, 2-ethyl-4-methylimidazole, 1-benzyl-2-phenylimidazole, 1-benzyl-2-methylimidazole, 1-cyanoethyl-2-methylimidazole, 1-cyanoethyl-2-phenylimidazole, 1-cyanoethyl-2-undecylimidazole, 2,4-diamino-6(2'-methylimidazole(1'))ethyl-s-triazine, 2,4-diamino-6 (2'-undecylimidazole(1'))ethyl-s-triazine, 2,4-diamino-6(2'-ethyl,4-methylimidazole(1'))ethyl-s-triazine, 2-phenyl-3,5-dihydroxymethylimidazole, 2-phenyl-4-hydroxymethyl-5-methylimidazole, and 1-cyanoethyl-2-phenyl-3,5-dicyanoethoxymethylimidazole.

The polymercaptan compound is not particularly limited. Examples thereof include: an alkyl polythiol such as 3,3'-dithiodipropionic acid, trimethylolpropane tris(thioglycolate), pentaerythritol tetrakis(thioglycolate), ethylene glycol dithioglycolate, 1,4-bis(3-mercaptobutyryloxy)butane, tris[(3-mercaptopropionyloxy) -ethyl] -isocyanurate (TEMPIC), 1,3,5-tris(3-mercaptobutyloxyethyl)-1,3,5-triazine-2,4,6(1H,3H,5H)-trione, trimethylolpropanetris(3-mercaptopropionate) (TMMP), pentaerythritol tetrakis(3-mercaptopropionate) (PEMP), pentaerythritol tetrakis(3-mercaptobutyrate), dipentaerythritol hexakis(3-mercaptopropionate) (DPMP), 1,4-butanedithiol, 1,6-hexanedithiol, and 1,10-decanedithiol; and a polythioether including a thiol group at a terminal.

The acid anhydride compound is not particularly limited. Examples thereof include tetrahydrophthalic anhydride, methyltetrahydrophthalic anhydride, hexahydrophthalic anhydride, methylhexahydrophthalic anhydride, methylendoethylenetetrahydrophthalic anhydride, trialkyltetrahydrophthalic anhydride, methylnadic anhydride, phthalic anhydride, trimellitic anhydride, pyromellitic anhydride, and maleic anhydride.

The content of the component (d) in the two-component curable resin composition for hydrogen gas sealing of the present embodiment is preferably 1 to 180 parts by mass, more preferably 3 to 140 parts by mass, still more preferably 5 to 100 parts by mass, and even still more preferably 5 to 15 parts by mass, relative to 100 parts by mass of the component (a). Within the above range, it is possible to obtain a cured material having much more excellent hydrogen gas barrier properties, high extensibility, and high strength. Preferably, when the agent A and the agent B are mixed, the content of the component (d) satisfies the above range.

The content of the component (d) in the two-component curable resin composition for hydrogen gas sealing of the present embodiment is preferably 1 to 150 parts by mass, more preferably 1 to 100 parts by mass, still more preferably 3 to 50 parts by mass, and even still more preferably 5 to 15 parts by mass, relative to 100 parts by mass of the component (c). Within the above range, it is possible to obtain a cured material having much more excellent hydrogen gas barrier properties, high extensibility, and high strength. Preferably, when the agent A and the agent B are mixed, the content of the component (d) satisfies the above range.

### <Component (e)>

The agent A and/or the agent B of the two-component curable resin composition for hydrogen gas sealing according to the present embodiment may further contain a silane coupling agent as a component (e). The silane coupling agent according to the present invention is a compound that contains an alkoxysilyl group and a reactive functional group other than the alkoxysilyl group in the molecule. Examples of the reactive functional group as used herein include a glycidyl group, a vinyl group, an amino group, a (meth)acryloyl group, an isocyanate group, and a sulfide group. When the agent A and/or the agent B contain(s) a silane coupling agent, it is possible to obtain a cured material having much more excellent hydrogen gas barrier properties, high extensibility, and high strength, which is preferable.

Examples of the silane coupling agent include a glycidyl group-containing silane coupling agent such as 2-(3,4-epoxycyclohexyl)ethyltrimethoxysilane, 3-glycidoxypropyltriethoxysilane, 3-glycidoxypropylmethyldimethoxysilane, glycidylpropyltrimethoxysilane(3-glycidoxypropyltrimethoxysilane), and 3-glycidoxypropylmethyldiethoxysilane; a vinyl group-containing silane coupling agent such as vinyl tris(β-methoxyethoxy)silane, vinyltriethoxysilane, and vinyltrimethoxysilane; a (meth)acrylic group-containing silane coupling agent such as γ-methacryloxypropyltrimethoxysilane; an amino group-containing silane coupling agent such as 3-(2-aminoethylamino)propyltrimethoxysilane(N-β-(aminoethyl)-γ-aminopropyltrimethoxysilane), γ-aminopropyltriethoxysilane, and N-phenyl-γ-aminopropyltrimethoxysilane; γ-mercaptopropyltrimethoxysilane, γ-chloropropyltrimethoxysilane, styryl silane, ureide silane, sulfide silane, and isocyanate silane. Among them, as the silane coupling agent, a glycidyl group-containing silane coupling agent, a vinyl group-containing silane coupling agent, and an amino group-containing silane coupling agentare preferable. In addition, from the viewpoint of hydrogen gas barrier properties, the agent A preferably contains a silane coupling agent that reacts with the component (d). As specific examples, it preferably contains a glycidyl group-containing silane coupling agent, and the glycidyl group-containing silane coupling agent is more preferably glycidylpropyltrimethoxysilane. The agent B preferably contains a silane coupling agent that reacts with the component (a) from the viewpoint of hydrogen gas barrier properties. As specific examples, it preferably contains an amino group-containing silane coupling agent, and the amino group-containing silane coupling agent is more preferably 3-(2-aminoethylamino)propyltrimethoxysilane. The silane coupling agent may be used alone or two or more kinds thereof may be used in combination.

The content of the component (e) in the agent A is not particularly limited, and is preferably 0.1 to 20 parts by mass, more preferably 0.2 to 15 parts by mass, still more preferably 0.3 to 10 parts by mass, and even still more preferably 0.3 to 3 parts by mass, relative to 100 parts by mass of the component (a). Within the above range, it is possible to obtain a cured material having much more excellent hydrogen gas barrier properties, high extensibility, and high strength.

The content of the component (e) in the agent B is preferably 0.1 to 20 parts by mass, more preferably 0.2 to 15 parts by mass, still more preferably 0.3 to 10 parts by mass, and even still more preferably 0.3 to 3 parts by mass, relative to 100 parts by mass of the component (c). Within the above range, hydrogen gas barrier properties are much more excellent.

### <Optional component>

The two-component curable resin composition for hydrogen gas sealing according to one embodiment of the present invention may contain an additive such as a curing accelerator, various elastomers such as a styrene copolymer, a filler, a storage stabilizer, an antioxidant, a flame retardancy imparting agent, a light stabilizer, a heavy metal deactivator, a plasticizer, a defoamer, a pigment, an antirust agent, a leveling agent, a dispersant, a rheology adjuster, a flame retardant, and a surfactant, as long as the object of the present invention is not impaired. Each of these components may be contained in either the agent A or the agent B, or in both.

The two-component curable resin composition for hydrogen gas sealing according to one embodiment of the present invention may contain a filler for the purpose of improving elastic modulus, fluidity, and the like of the cured material. Specific examples of the filler include inorganic powder and organic powder.

Examples of the filler of the inorganic powder include glass, fumed silica, mica, ceramics, silicone rubber powder, calcium carbonate, carbon powder, kaolin clay, dried clay minerals, dried diatomaceous earth, and metallic powder. Examples of the filler of the metallic powder include gold, silver, copper, alumina, and aluminum nitride. Examples of the filler of the organic powder include polyethylene, polypropylene, nylon, cross-linked acryl, cross-linked polystyrene, polyester, polyvinyl alcohol, polyvinyl butyral, and polycarbonate. The content of the filler is not particularly limited. When the filler is added to the agent A, the content thereof is preferably 0.1 to 300 parts by mass relative to 100 parts by mass of the component (a). When the filler is added to the agent B, the content thereof is preferably 0.1 to 300 parts by mass relative to 100 parts by mass of the component (c). Within the above ranges, it is possible to obtain a cured material having higher extensibility and higher strength, and the two-component curable resin composition for hydrogen gas sealing is more excellent in workability.

Among the fillers of the inorganic powder, fumed silica can be suitably used from the viewpoints of adjusting the viscosity of the two-component curable resin composition for hydrogen gas sealing or improving the mechanical strength of the cured material. As examples of the fumed silica, fumed silica that is surface-treated with dimethylsilane, trimethylsilane, alkylsilane, methacryloxysilane, organochlorosilane, polydimethylsiloxane, hexamethyldisilazane, or the like can be suitably used. Examples of commercially available products of the fumed silica include AEROSIL (Registered Trademark) R972, R972V, R972CF, R974, R976, R976S, R9200, RX50, NAX50, NX90, RX200, RX300, R812, R812S, R8200, RY50, NY50, RY200S, RY200, RY300, R104, R106, R202, R805, R816, T805, R711, RM50, and R7200 (available from NIPPON AEROSIL CO., LTD.), and TS720 (available from Cabot Corp).

Examples of the storage stabilizer include tetrafunctional alkoxysilanes such as tetramethoxysilane and tetraethoxysilane, and silicate compounds such as methyltrimethoxysilane, methyltriethoxysilane, ethylsilicate, propyl silicate, and butyl silicate. These can be used alone or two or more kinds thereof can be used in combination.

The two-component curable resin composition for hydrogen gas sealing according to one embodiment of the present invention contains the agent A and the agent B described above, and preferably consists of the agent A and the agent B. The agent A is a composition containing the component (a) and the component (b), and the agent B is a composition containing the component (c) and the component (d). As described above, division of components into two compositions of the agent A and the agent B makes it possible to suppress useless reaction during the storage and to improve storage stability. Note that, in such a two-component curable resin composition for hydrogen gas sealing, the agent A and the agent B can be produced by mixing each component by a known method. Then, at the time of use, the agent A and the agent B can be mixed by a known method for use.

In the two-component curable resin composition for hydrogen gas sealing according to one embodiment of the present invention, the content of the agent B is preferably in the range of 10 to 300 parts by mass, and preferably 30 to 200 parts by mass, and still more preferably 50 to 150 parts by mass, relative to 100 parts by mass of the agent A.

### <Cured material>

Another embodiment of the present invention is a cured material obtained by curing the two-component curable resin composition for hydrogen gas sealing described above (cured material of the two-component curable resin composition for hydrogen gas sealing). The cured material, which is another embodiment of the present invention, is obtained by mixing the agent A and the agent B constituting the two-component curable resin composition for hydrogen gas sealing, and curing the mixed two-component curable resin composition for hydrogen gas sealing.

The cured material of the two-component curable resin composition for hydrogen gas sealing of the present invention has a sea-island structure. When the cured material has a sea-island structure, it is possible to obtain a cured material having excellent hydrogen gas barrier properties, high extensibility, and high strength. Here, the "sea-island structure" in the present invention represents a structure in which a phase constituting the island (corresponding to an island) are dispersed in another phase (corresponding to sea). The above sea-island structure can be confirmed by observing it at a magnification of 2,000 to 10,000 with a CCD camera, a scanning electron microscope (SEM), or the like. In addition, as a method for confirming that the cured material has a sea-island structure, a method for confirming its appearance is exemplified. Specifically, when the appearance has transparency immediately after the agent A and the agent B of the present invention are mixed, and the appearance of the cured material has cloudiness, it can be determined that the sea-island structure is formed. Note that, in the present invention, as the cured material for confirming whether the cured material has a sea-island structure, a product, which is obtained by mixing the agent A and the agent B of the two-component curable resin composition for hydrogen gas sealing, and then aging the mixture for 168 hours under an environment of 25°C and 50% RH to cure the mixture, is used. In order to achieve a cured material having excellent hydrogen gas barrier properties, high extensibility, and high strength, the sea preferably includes the component (c) and the island preferably includes the component (a). The area ratio between the sea and the island is preferably 95:5 to 40:60.

A means for achieving the cured material having a sea-island structure is not particularly limited. For example, a cured material having a sea-island structure can be obtained by mixing the agent A and the agent B of the two-component curable resin composition for hydrogen gas sealing of the present embodiment, and then aging the mixture under an environment of 20 to 30°C and 40 to 60% RH to cure the mixture.

At this time, for example, when the component (a) includes a hydrogenated epoxy resin as the component (a-1), a cured material having a sea-island structure can be easily obtained, which is preferable. In addition, a titanium catalyst is used as the component (b), it is easy to appropriately control a curing rate, and thus a cured material having a sea-island structure can be easily obtained, which is preferable. Moreover, when a tertiary amine is used as the component (d), it is easy to appropriately control a curing rate, and thus a cured material having a sea-island structure can be easily obtained, which is preferable. In a preferable embodiment, in the two-component curable resin composition for hydrogen gas sealing, the component (a) contains a hydrogenated epoxy resin as the component (a-1) and the component (b) contains a titanium catalyst in the agent A, and the component (d) contains a tertiary amine in the agent B.

A hydrogen gas permeation coefficient of the cured material of the two-component curable resin composition for hydrogen gas sealing of the present embodiment is preferably 1.0 × 10⁻¹⁴ mol·m/(m²s·Pa) or less, more preferably 0.9 × 10⁻¹⁴ mol·m/(m²s·Pa) or less, and still more preferably 0.8 × 10⁻¹⁴ mol·m/(m²s·Pa) or less. When the cured material has a hydrogen gas permeation coefficient of 1.0 × 10⁻¹⁴ mol·m/(m²s·Pa) or less, it can be suitably used as an adhesive for hydrogen gas sealing. The lower limit of the hydrogen gas permeation coefficient of the cured material, which is not particularly limited, is preferably lower, and is, for example, 1.0 × 10⁻¹⁷ mol·m/(m²s·Pa) or more. The hydrogen gas permeation coefficient of the cured material is a value measured by a method described in Examples later.

### <Method for producing cured material>

A method for producing a cured material having a sea-island structure, the cured material containing mixing the following agent A and agent B, followed by aging the obtained mixture under an environment of 20 to 30°C and 40 to 60% RH, is also one embodiment of the present invention:
agent A: a composition containing an epoxy resin as a component (a) and a catalyst as a component (b),
where the component (a) contains a hydrogenated epoxy resin as a component (a-1); and
agent B: a composition containing an organic polymer having two or more hydrolyzable silyl groups in one molecule as a component (c) and a curing agent for an epoxy resin as a component (d).

Preferably, the agent A and the agent B are mixed, and the obtained mixture is then aged under an environment of 25°C and 50% RH.

The aging time is not particularly limited, but is preferably 12 hours or more, more preferably 24 hours or more, and most preferably 72 hours or more. The upper limit of the aging time, which is not particularly limited, is, for example, 300 hours or less, preferably 200 hours or less, and more preferably 180 hours or less.

### <Application>

The two-component curable resin composition for hydrogen gas sealing of one embodiment of the present invention is preferably used in various applications such as adhesives, sealing agents, sealants, potting agents, coating agents, and lining materials because a cured material having excellent hydrogen gas barrier properties, high extensibility, and high strength can be obtained. Examples of the hydrogen gas sealing include sealing agents/adhesives for hydrogen gas storage tanks, fuel cells, gas piping, and members around the valves of gas cylinders.

Therefore, one embodiment of the present invention is use of a two-component curable resin composition including the following agent A and agent B for hydrogen gas sealing, wherein the cured material of the two-component curable resin composition has a sea-island structure:
agent A: a composition containing an epoxy resin as a component (a) and a catalyst as a component (b),
agent B: a composition containing an organic polymer having two or more hydrolyzable silyl groups in one molecule as a component (c) and a curing agent for an epoxy resin as a component (d).

One embodiment of the present invention is use of a two-component curable resin composition including the following agent A and agent B for hydrogen gas sealing:
agent A: a composition containing an epoxy resin as a component (a) and a catalyst as a component (b),
where the component (a) contains a hydrogenated epoxy resin as a component (a-1); and
agent B: a composition containing an organic polymer having two or more hydrolyzable silyl groups in one molecule as a component (c) and a curing agent for an epoxy resin as a component (d).

In addition, one embodiment of the present invention is use of the above two-component curable resin composition for hydrogen gas sealing for a hydrogen gas storage tank, a fuel cell, a gas piping, or a member around a valve of a gas cylinder.

### Examples

The present invention will be described in more detail below with reference to the Examples, but the present invention is not limited to these Examples. In the following Examples, unless otherwise specified, operations were performed at room temperature (25°C).

### <Preparation of two-component curable resin composition for hydrogen gas sealing>

The respective components described below were collected in rates (parts by mass) as described in Table 1, and were mixed using a mixer for 60 minutes at normal temperature, to prepare the agent A and the agent B, respectively, which correspond to the two-component curable resin composition for hydrogen gas sealing. The details of the respective components are as follows.

### <Component (a)>

a-1-1: Hydrogenated bisphenol A type epoxy resin (RIKARESIN (Registered Trademark) HBE-100, available from New Japan Chemical Co., Ltd.), viscosity (25°C) of 2 Pa·s
a-2-1: Bisphenol A type epoxy resin (jER (Registered Trademark) 828, available from Mitsubishi Chemical Corporation), viscosity (25°C) of 13 Pa·s
a-2-2: Bisphenol F type epoxy resin (jER (Registered Trademark) 807, available from Mitsubishi Chemical Corporation), viscosity (25°C) of 4 Pa·s.

### <Component (b)>

b1: Titanium tetraisopropoxide (ORGATIX (Registered Trademark) TA-8, component concentration of 99% by mass or more, available from Matsumoto Fine Chemical Co., Ltd.)
b2: Titanium diisopropoxybis(acetylacetonate) (ORGATIX (Registered Trademark) TC-100, component concentration of 75% by mass or more, available from Matsumoto Fine Chemical Co., Ltd.)
b3: Tetratertiary butyl titanate (ORGATIX (Registered Trademark) TA-80, component concentration of 83% by mass or more, available from Matsumoto Fine Chemical Co., Ltd.).

### <Component (c)>

c1: Polyoxyalkylene having trimethoxysilyl groups at both terminals (SAX575, liquid at 25°C, viscosity (23°C) of 50 Pa·s, available from KANEKA CORPORATION)
c2: Polyoxyalkylene having methyldimethoxysilyl groups at both terminals (SAX750, liquid at 25°C, viscosity (23°C) of 46 Pa·s, available from KANEKA CORPORATION) .

### <Component (d)>

d1: 2,4,6-Tris(dimethylaminomethyl)phenol (ANCAMINE (Registered Trademark) K54, liquid at 25°C, available from Air Products Japan).

### <Component (e)>

e1: Glycidylpropyltrimethoxysilane (KBM-403, available from Shin-Etsu Chemical Co., Ltd.)
e2: 3-(2-Aminoethylamino)propyltrimethoxysilane (DOWSIL (trademark registration) Z-6094 Silane, available from Dow Toray Co., Ltd.) (it is not considered as the component (d) in the present invention).

The test methods in Examples and Comparative Examples of Table 1 are as follows.

### <(1) Hydrogen gas permeation test of cured material>

The agent A (100 g) and the agent B (100 g) of each of the two-component curable resin compositions for hydrogen gas sealing in Examples and Comparative Examples were mixed under an environment of 25°C. Then, the thickness of the mixed resin composition was set to 1 mm, and the mixed resin composition was cured by aging the mixed resin composition for 168 hours under an environment of 25°C and 50% RH to prepare a sheet-like cured material. Then, the sheet-like cured material was used to measure the hydrogen gas permeation coefficient according to JIS K7126-1:2006 (Plastics-Film and sheeting-Determination of gas-transmission rate- Part 1 : Differential -pressure method). Note that, the kind of test was the pressure sensor method, the measurement was performed under the condition of 23°C, and at 100 kPa of the test gas (hydrogen gas) at the high-pressure side. Results are shown in Table 1. In the present invention, in order to be used in hydrogen gas sealing, the hydrogen gas permeation coefficient is preferably 1.0 × 10¹⁴ mol·m/(m²s·Pa) or less.

### <(2) Tensile strength measurement of cured material>

The agent A (100 g) and the agent B (100 g) of each of the two-component curable resin compositions for hydrogen gas sealing in Examples and Comparative Examples were mixed under an environment of 25°C. Then, the thickness of the mixed resin composition was set to 1 mm, and the mixed resin composition was cured by aging the mixed resin composition for 168 hours under an environment of 25°C and 50% RH to prepare a sheet-like cured material. The cured material was punched out with a No. 3 dumbbell to prepare a test piece. Both ends of the test piece were fixed to a chuck such that the long axis of the test piece and the center of the chuck were aligned. The test piece was pulled at a tensile speed of 500 mm/min, and the maximum load was measured. The strength at the maximum load was defined as "tensile strength (MPa)". The results are shown in Table 1. Details are in accordance with JIS K6251 (2010). In the present invention, in order to be used in hydrogen gas sealing, the tensile strength is preferably 5 MPa or more, and more preferably 8 MPa or more.

### <(3) Measurement method of elongation of cured material>

The agent A (100 g) and the agent B (100 g) of each of the two-component curable resin compositions for hydrogen gas sealing in Examples and Comparative Examples were mixed under an environment of 25°C. Then, the thickness of the mixed resin composition was set to 1 mm, and the mixed resin composition was cured by aging the mixed resin composition for 168 hours under an environment of 25°C and 50% RH to prepare a sheet-like cured material. The cured material was punched out with a No. 3 dumbbell to prepare a test piece, and marked lines were drawn on the test piece at 20 mm intervals.

The test piece was fixed to the chuck in the same manner as in the measurement of the tensile strength, and pulled at a tensile speed of 500 mm/min until the test piece was broken. During the measurement, the test piece was stretched and the interval between the marked lines was widened. Therefore, the interval between the marked lines was measured with a caliper until the test piece was broken. The interval (mm) between the marked lines immediately before the breakage was divided by the initial interval (20 mm) between the marked lines to calculate the percentage of extension as " elongation (%)" (elongation (%) = (interval between the marked lines immediately before the breakage / initial interval between the marked lines) × 100). The results are shown in Table 1. In order to be used in hydrogen gas sealing, the elongation is preferably 300% or more, more preferably 400% or more, and particularly preferably 430% or more.

### <(4) Test for confirming presence or absence of sea-island structure in cured material>

The agent A (100 g) and the agent B (100 g) of each of the two-component curable resin compositions for hydrogen gas sealing in Examples and Comparative Examples were mixed under an environment of 25°C. Then, the thickness of the mixed resin composition was set to 1 mm, and the mixed resin composition was cured by aging the mixed resin composition for 168 hours under an environment of 25°C and 50% RH to prepare a sheet-like cured material.

The surface of the obtained cured material was observed using a CCD camera at a magnification of 2,000, to confirm presence or absence of a sea-island structure. Results are shown in Table **1.** The cured material formed of the two-component curable resin composition for hydrogen gas sealing of the present invention has a sea-island structure.

### [Table 1]

**Table 1**

| | Component | Example 1 | Example 2 | Example 3 | Comparative Example 1 | Comparative Example 2 |
|---|---|---|---|---|---|---|
| Agent A | a-1-1 | 100 | 50 | 50 | - | - |
| | a-2-1 | - | 50 | 50 | 100 | - |
| | a-2-2 | - | - | - | - | 100 |
| | e1 | 1 | 1 | 1 | 1 | 1 |
| | b1 | 4 | - | - | - | - |
| | b2 | - | 4 | - | 4 | 4 |
| | b3 | - | - | 8 | - | - |
| Agent B | c1 | 50 | 50 | 50 | 50 | 50 |
| | c2 | 50 | 50 | 50 | 50 | 50 |
| | d1 | 10 | 10 | 10 | 10 | 10 |
| | e2 | 2 | 2 | 2 | 2 | 2 |
| (1) Hydrogen gas permeation coefficient × 10⁻¹⁴ mol·m/ (m²·s·Pa) | | 0.8 | 0.8 | 0.8 | 3.2 | 3.5 |
| (2) Tensile strength MPa | | 7.4 | 10.6 | 10.0 | 7.4 | 4.1 |
| (3) Elongation % | | 740 | 525 | 450 | 250 | 200 |
| (4) Presence or absence of sea-island structure | | Presence | Presence | Presence | Absence | Absence |

From the results of Examples 1 to 3 of Table 1, a sea-island structure was formed in the cured material of the two-component curable resin composition for hydrogen gas sealing of the present invention, and it could be confirmed that the cured material having excellent hydrogen gas barrier properties, high extensibility, and high strength can be obtained. Comparative Examples 1 and 2, which were compositions that provided cured materials having no sea-island structure, provided cured materials that had poor hydrogen gas barrier properties and did not have high extensibility. As described above, when the cured material has a sea-island structure, it is found that excellent hydrogen gas barrier properties, high extensibility, and high strength can be achieved.

### Industrial Applicability

Since the two-component curable resin composition for hydrogen gas sealing of the present invention makes it possible to obtain a cured material having excellent hydrogen gas barrier properties, high extensibility, and high strength, it can be suitably used in various applications such as adhesives, sealing agents, sealants, potting agents, coating agents, and the like. Therefore, the present invention is industrially useful since it can be applied in a wide range of fields.

The present application is based on Japanese Patent Application No. 2022-148374, filed on September 16, 2022, the disclosure of which is hereby incorporated by reference in its entirety.

## Claims

1. A two-component curable resin composition for hydrogen gas sealing, comprising the following agent A and agent B:
agent A: a composition containing an epoxy resin as a component (a) and a catalyst as a component (b); and
agent B: a composition containing an organic polymer having two or more hydrolyzable silyl groups in one molecule as a component (c) and a curing agent for an epoxy resin as a component (d),
wherein a cured material of the two-component curable resin composition for hydrogen gas sealing has a sea-island structure.

2. The two-component curable resin composition for hydrogen gas sealing according to claim 1,
wherein the component (a) contains a hydrogenated epoxy resin as a component (a-1).

3. The two-component curable resin composition for hydrogen gas sealing according to claim 1 or 2,
wherein the two-component curable resin composition for hydrogen gas sealing contains 0.1 to 20 parts by mass of the component (b) relative to 100 parts by mass of the component (c).

4. The two-component curable resin composition for hydrogen gas sealing according to claim 1 or 2,
wherein the hydrolyzable silyl group includes a trimethoxysilyl group.

5. The two-component curable resin composition for hydrogen gas sealing according to claim 1 or 2,
wherein the component (d) is an amine compound that is liquid at 25°C.

6. The two-component curable resin composition for hydrogen gas sealing according to claim 1 or 2,
wherein the agent A and/or the agent B further contain(s) a silane coupling agent as a component (e).

7. The two-component curable resin composition for hydrogen gas sealing according to claim 1 or 2,
wherein the component (a) contains a hydrogenated epoxy resin as a component (a-1) and an aromatic epoxy resin as a component (a-2).

8. The two-component curable resin composition for hydrogen gas sealing according to claim 1 or 2,
wherein the cured material is obtained by mixing the agent A and the agent B, followed by aging a mixture for 12 hours or more under an environment of 20 to 30°C and 40 to 60% RH.

9. A two-component curable resin composition for hydrogen gas sealing, comprising the following agent A and agent B:
agent A: a composition containing an epoxy resin as a component (a) and a catalyst as a component (b),
where the component (a) contains a hydrogenated epoxy resin as a component (a-1); and
agent B: a composition containing an organic polymer having two or more hydrolyzable silyl groups in one molecule as a component (c) and a curing agent for an epoxy resin as a component (d).

10. A cured material obtained by curing the two-component curable resin composition for hydrogen gas sealing according to claim 1 or 9.

11. A method for producing a cured material having a sea-island structure, comprising:
mixing the following agent A and agent B, followed by aging a mixture under an environment of 20 to 30°C and 40 to 60% RH:
agent A: a composition containing an epoxy resin as a component (a) and a catalyst as a component (b),
where the component (a) contains a hydrogenated epoxy resin as a component (a-1); and
agent B: a composition containing an organic polymer having two or more hydrolyzable silyl groups in one molecule as a component (c) and a curing agent for an epoxy resin as a component (d).
